# EUROPEAN PATENT SPECIFICATION

(11) **EP 4 621 526 B1**
(45) Date of publication and mention of the grant of the patent: **09.09.2026**
(21) Application number: 25164914.1
(22) Date of filing: 20.03.2025
(51) Int. Cl.: G06F 1/16, H04M 1/02

(54) **CONNECTION DEVICE AND ELECTRONIC DEVICE**
VERBINDUNGSVORRICHTUNG UND ELEKTRONISCHE VORRICHTUNG
DISPOSITIF DE CONNEXION ET DISPOSITIF ÉLECTRONIQUE

(30) Priority: 22.03.2024 JP 2024046721
(43) Date of publication of application: 24.09.2025
(73) Proprietor: Panasonic Intellectual Property Management Co., Ltd., Kadoma-shi, Osaka 571-0057 (JP)
(72) Inventor: SATO, Takashi, Osaka, 571-0057 (JP); TAKETANI, Keiichi, Osaka 571-0057 (JP)
(74) Representative: Eisenführ Speiser

(56) References cited:
- EP-A1- 4 485 656
- WO-A1-2023/162892
- FR-A1- 2 945 591
- JP-A- H10 208 719

## Description

### TECHNICAL FIELD

The present disclosure relates to a connection device and an electronic device.

### BACKGROUND ART

WO 2023/162892 Al discloses a blood glucose meter comprises a main body part, a sensor mounting part, a measurement unit, a battery compartment, a battery cover, a hinge, a lock pin, and sliding surfaces. The battery cover has an opening into which a jig is inserted during removal from the body portion. The hinge deforms when pressed by the jig inserted through the opening. The lock pin is provided at a position where it is exposed to the outside through the opening, and when pressed by the jig, the battery cover is unlatched from the main body portion. When the battery cover is slid along the sliding surfaces in a state in which the battery cover is latched to the main body portion by the lock pin, a force in a compression direction is exerted on the hinge.

In order to prevent an unintentional loss of a cover of a battery housing part due to the coming off of the cover and prevent a battery from dropping out due to the loss, it is proposed in JP H10 208719 A that a cover is formed unitedly with a joining piece and a projected part is projected in the joining piece. A battery housing part to house the battery is formed in a case and further a hole for releasing the cover is formed in the peripheral part of the battery housing part on the upper face of the case. A joining piece of the cover is joined with the case to fix the cover in the case and in this condition, the projected part of the joining piece is at the position where the projected part can be seen through the hole for releasing the cover from the outside. At the time when the cover s taken out of the case, a screw driver is inserted into the hole for releasing the cover and the projected part is pushed downward to elastically deform the joining piece and while the joining of the joining piece with the case being released, the cover is pulled and the cover is taken out and consequently, the height of the projected part of the joining piece can be heightened and the joining of the cover with the case is made firm. As a result, the cover is prevented from spontaneously coming off and a battery is prevented from dropping due to the coming off of the cover.

FR 2 945 591 A1 discloses a device for assembling and disassembling two mechanical parts, comprising a first part on which is positioned a pin disposed on a support, said support allowing vertical movement of said pin, and a projecting part disposed on said support, and a second part in which are created a groove and a hole suitable for guiding and receiving said pin, wherein that the upper face of said pin has an angle that is at least greater than that presented by said groove, and that said angle of said pin allows, when supported by any object with a diameter smaller than that of said hole, on the one hand, the second part to be unlocked from the first part and on the other hand, the second part to be translated from the first part, thus facilitating its extraction.

JP2002-216728A discloses an electronic equipment casing including: a casing main body that includes a battery accommodation portion; and a battery cover that includes a locking claw, engages with a part of the casing main body and maintains a state of being attached to the casing main body to cover the battery accommodation portion.

In the electronic equipment casing, a release hole that penetrates to an outside is provided in a portion of the casing main body that the locking claw faces when the battery cover is attached to the casing main body, and a locked state is released by inserting a rod-shaped member into this release hole and pressing the locking claw.

### SUMMARY OF INVENTION

The present disclosure has been made in view of the above circumstances in the related art, and an object thereof is to improve an effect of preventing unexpected disconnection in a connection structure that enables a plurality of units to be attached and detached.

According to an illustrative aspect of the present disclosure, a (connection or electronic) device includes a first unit and a second unit, which are attachably and detachably connected to each other. The device includes: a casing of the first unit; a latch that is provided inside the casing of the first unit and includes a pressing portion; and an engagement portion provided in the second unit and configured to engage with the latch. The latch is movable when the pressing portion is pressed. The casing is provided with a first through hole along a predetermined direction. The pressing portion is provided with a second through hole along the predetermined direction. A width of the first through hole is greater than a width of the second through hole.

According to the present disclosure, in a connection structure that enables a plurality of units to be attached and detached, the effect of preventing unexpected disconnection can be improved.

### BRIEF DESCRIPTION OF DRAWINGS

FIGS. 1A and 1B are views illustrating an example of an electronic device, FIG. 1A is a view illustrating a front surface thereof viewed from a user, and FIG. 1B is a view illustrating a back surface thereof viewed from the user;
FIGS. 2A and 2B are views illustrating an example of a rear surface of the electronic device and access holes, FIG. 2A is a view illustrating the entire rear surface of the electronic device, and FIG. 2B is an enlarged view of an access hole and surroundings thereof;
FIG. 3 is a view illustrating a monitor unit and a peripheral bar unit when connected;
FIGS. 4A to 4E are views illustrating a process of detaching the monitor unit and the peripheral bar unit;
FIG. 5 is a view illustrating the monitor unit and the peripheral bar unit when not connected;
FIGS. 6A and 6B are views illustrating a relation between a plurality of through holes and a tool, FIG. 6A is a perspective view and FIG. 6B is an explanatory view;
FIG. 7 is a view illustrating a pressing portion of a latch;
FIG. 8 is a view illustrating a positional relation between the plurality of through holes; and
FIG. 9 is a cross-sectional view illustrating a positional relation between the plurality of through holes and a stopper.

### DESCRIPTION OF EMBODIMENTS

### (Background of Present Disclosure)

In a modern aircraft, each seat is provided with an electronic device (for example, an in-flight entertainment (IFE) device) such as a personal monitor capable of viewing movies, playing games, reading, checking flight status, and the like, or a seat monitor capable of providing other in-flight entertainment. In the related art, an electronic device is provided with a monitor and connection portions for accessory devices (insertion ports) such as an earphone plug, a USB connector, and Wi-Fi (registered trademark) communication. However, compared with a long life cycle of the monitor, these connection portions may require updates due to changes in technique, and may have a shorter life cycle than the monitor. Therefore, an electronic device in which a monitor and a connection portion are attachable and detachable, and the connection portion is replaceable, has begun to appear. It is desirable that the monitor and the connection portion be attached and detached only by a predetermined staff for maintenance or the like.

JP2002-216728A discloses the electronic equipment casing in which a release hole that penetrates to the outside is provided in a portion of the casing main body that the locking claw faces when the battery cover is attached to the casing main body, and a locked state is released by inserting a rod-shaped member into this release hole and pressing the locking claw.

However, a passenger in the aircraft may carry a rod-shaped member such as a toothpick to be used during meals. In this case, with the configuration described in JP2002-216728A, there is a risk that a passenger may release the lock, for example, as a prank. As a result, the monitor and components thereof may be damaged or broken. Therefore, there is a need for a structure in which it is less likely for a person other than a predetermined staff member (for example, a mechanic) for maintenance or the like to release the lock by a tool (such as a toothpick) other than a predetermined rod-shaped member.

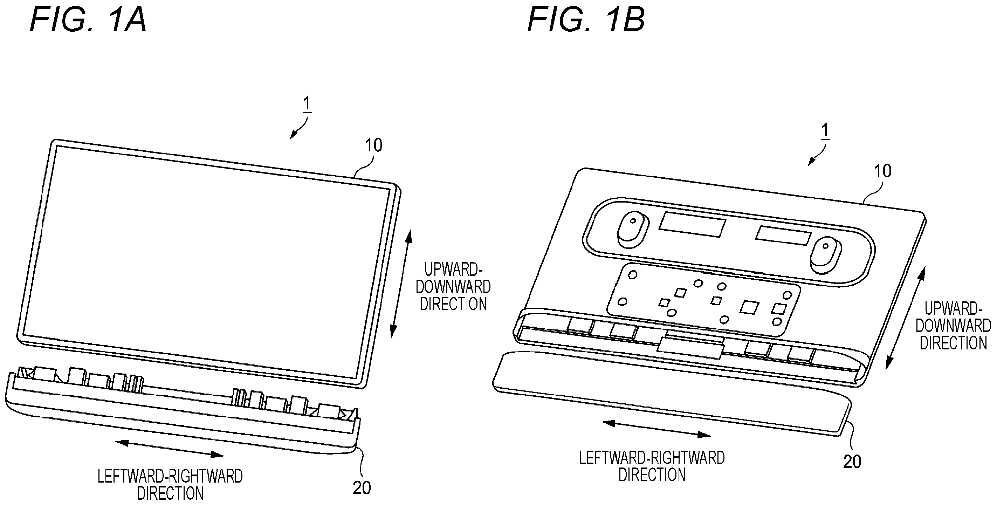

Hereinafter, embodiments specifically disclosing configurations and operations of a connection device according to the present disclosure will be described in detail with reference to the drawings as appropriate. However, unnecessarily detailed description may be omitted. For example, the detailed descriptions of well-known matters and the redundant description of substantially the same configuration may be omitted. This is to avoid unnecessary redundancy of the following description and facilitate understanding of those skilled in the art. The accompanying drawings and the following description are provided for those skilled in the art to fully understand the present disclosure, and are not intended to limit the subject matters described in the claims. Hereinafter, although a connection device will be described using an electronic device such as an IFE device, the connection device is not limited to the electronic device and may be used for any device. In this specification, an upward-downward direction is defined as a direction in which a monitor unit 10 and a peripheral bar unit 20 are connected as illustrated in FIGS. 1A and 1B. A leftward-rightward direction is defined as a longitudinal direction of the monitor unit 10 or the peripheral bar unit 20 among directions substantially perpendicular to the upward-downward direction. An outer side is defined as a direction away from the member in the leftward-rightward direction, and an inner side is defined as a direction opposite to the outside in the leftward-rightward direction. A left side is defined as a left side of the drawing sheet in the leftward-rightward direction, and a right side is defined as a right side of the drawing sheet. An upper side is defined as an upper side of the drawing sheet in the upward-downward direction, and a lower side is defined as a lower side of the drawing sheet.

### (Embodiment)

### 1. Regarding Electronic Device 1

First, an electronic device 1 will be described. FIGS. 1A and 1B are views illustrating an example of an electronic device, FIG. 1A illustrates a front surface viewed from a user (passenger), and FIG. 1B illustrates a back surface viewed from the user (passenger). The electronic device 1 is, for example, an IFE device mounted around a seat of an aircraft or the like. The electronic device 1 includes a monitor unit 10 and a peripheral bar unit 20. The monitor unit 10 includes a built-in display or monitor. The peripheral bar unit 20 is provided with connection portions for accessory devices, such as an earphone plug, a USB connector, and others (such as an earphone jack, a USB port, or the like). The monitor unit 10 is likely to be used for a long period of time. However, the peripheral bar unit 20 often experiences changes in connector standards over time, and due to frequent physical contact, such as insertion ports, the likelihood of failure is high, making the need for replacement greater.

### 2. Regarding Detachment of Monitor Unit 10 and Peripheral Bar Unit 20

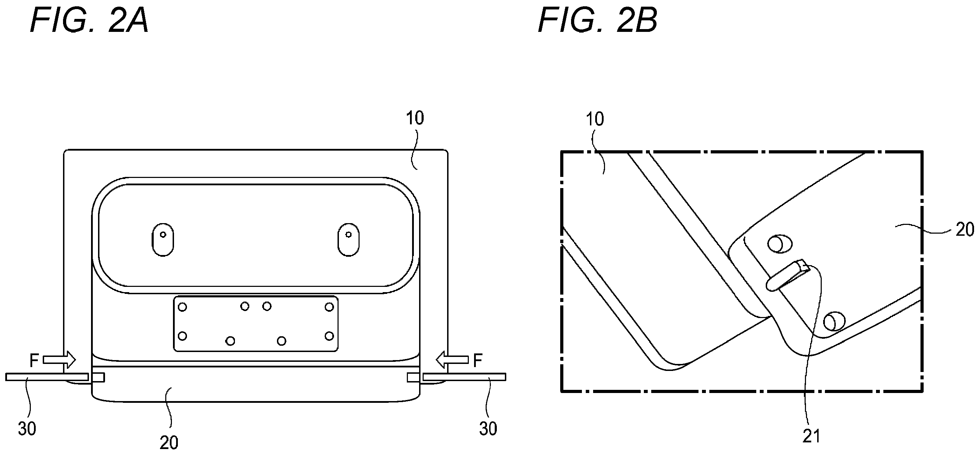

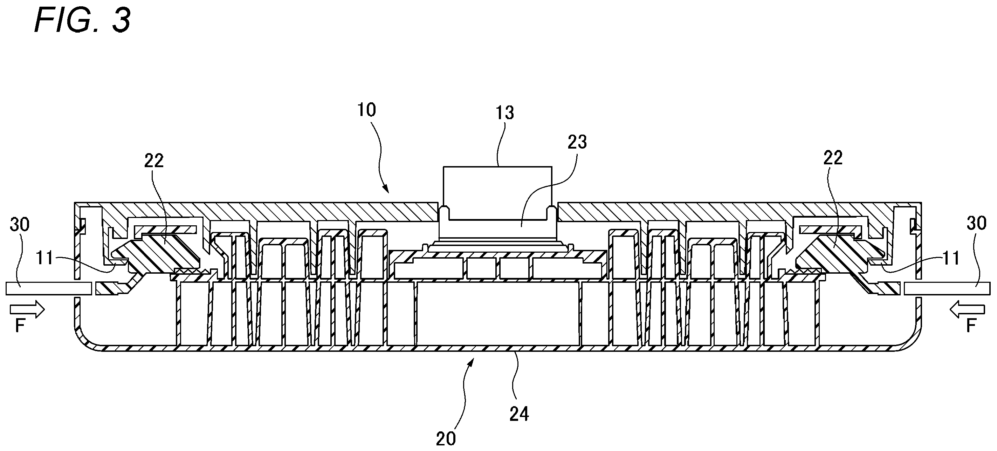

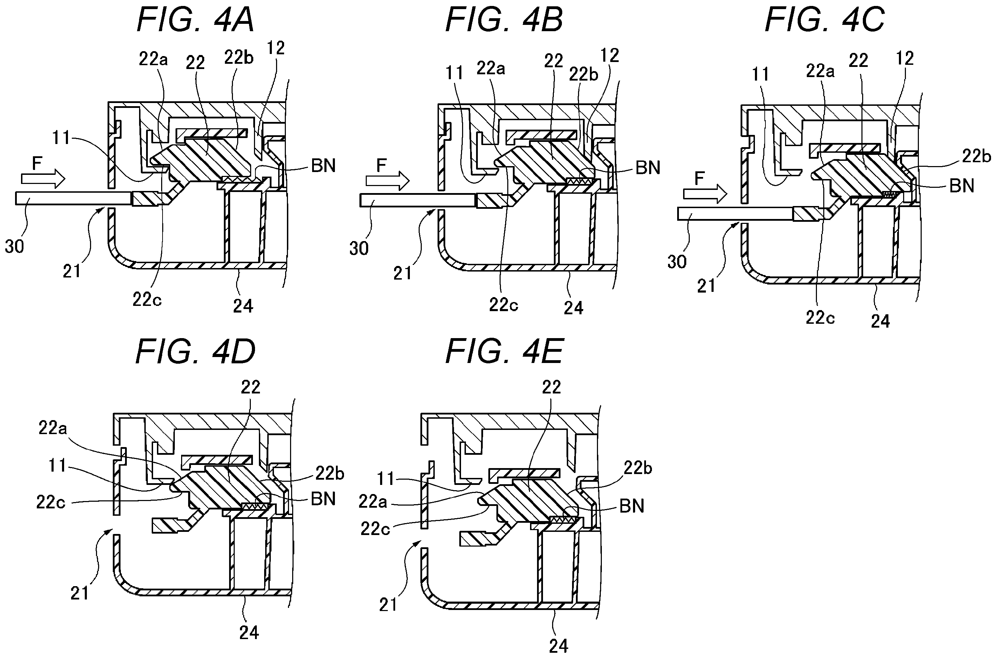

Next, detachment of the monitor unit 10 and the peripheral bar unit 20 will be described. FIGS. 2A and 2B are views illustrating an example of a rear surface of the electronic device 1 and access holes. FIG. 2A is a view illustrating the entire rear surface of the electronic device 1, and FIG. 2B is an enlarged view of an access hole and surroundings thereof. FIG. 3 is a view illustrating the monitor unit 10 and the peripheral bar unit 20 when connected. FIGS. 4A to 4E are views illustrating a process of detaching the monitor unit 10 and the peripheral bar unit 20, and states change from FIGS. 4A to 4E over time. Further, although FIGS. 4A to 4E illustrate only a configuration of the back surface of the peripheral bar unit 20 on a left side to simplify the description, the following description of FIGS. 4A to 4E can be similarly applied to a configuration of the back surface of the peripheral bar unit 20 on a right side.

As illustrated in each of FIGS. 2A and 2B, access holes 21 are provided in the peripheral bar unit 20 on the rear surface. By pushing a tool 30 such as a rod-shaped tool into the access hole 21, a staff (for example, a maintenance person for the electronic device 1) can detach the monitor unit 10 and the peripheral bar unit 20. Here, since the monitor unit 10 is fixed to an airframe, the peripheral bar unit 20 is detached from the fixed monitor unit 10. The access holes 21 are generally provided at two locations, that is, one on each of left and right sides.

As illustrated in FIG. 3, latches 22 are provided on left and right sides in a casing 24 of the peripheral bar unit 20. The casing 24 is formed in a rectangular shape having four outlines and in which adjacent outlines are substantially orthogonal to each other. The latch 22 is biased by a spring BN (see FIGS. 4A to 4E), and receives a force from the spring BN toward an outer side of the casing 24 in the leftward-rightward direction. The latch 22 of the peripheral bar unit 20 is engaged by an engagement portion 11 of the monitor unit 10, thereby maintaining a state in which the monitor unit 10 and the peripheral bar unit 20 are physically connected. Further, the monitor unit 10 and the peripheral bar unit 20 are physically and electrically connected to each other by a connection portion 13 (plug) of the monitor unit 10 and a connection portion 23 (insertion port) of the peripheral bar unit 20. By pushing the tool 30 through the access hole 21 provided in the casing 24 as illustrated in FIGS. 2A and 2B, a force indicated by the arrow F is applied to an inner side of the casing 24. Then, the latch 22 biased by the spring BN is pushed to the inner side of the casing 24 of the peripheral bar unit 20, and a connection between the monitor unit 10 and the peripheral bar unit 20 is released as the latch 22 is detached from the engagement portion 11, and the monitor unit 10 and the peripheral bar unit 20 are detached.

The detachment of the monitor unit 10 and the peripheral bar unit 20 will be described in detail with reference to each of FIGS. 4A to 4E. The latch 22 includes inclined surfaces 22a and 22b on left and right upper surfaces, respectively, and has a trapezoidal shape in which an upper edge is shorter than a lower edge. The upper edge and the lower edge mutually extend along the leftward-rightward direction of the casing 24. In FIG. 4A, at an engagement position, the latch 22 engages with the engagement portion 11 at an engagement end 22c. An engagement surface of the engagement end 22c of the latch 22 and an engaged surface of the engagement portion 11 face each other. That is, in FIG. 4A, the monitor unit 10 and the peripheral bar unit 20 are in a connected state. The engaged surface of the engagement portion 11 is a surface on which a force biasing the latch 22 in the outer side direction is applied to the latch 22 when a force separating the peripheral bar unit 20 from the monitor unit 10 (see, for example, the force indicated by the arrow F) is applied. Further, when the monitor unit 10 and the peripheral bar unit 20 are pulled in a direction of separation, the latch 22 is less likely to be disengaged.

Then, as illustrated in FIG. 4B, the pushed latch 22 pushed in a direction to the inner side of the casing 24 moves in a disengagement direction from the engagement position, and comes into contact with a rib 12 provided on the monitor unit 10. At this time, a lower edge of the inclined surface 22b of the latch 22 on the right side comes into contact with the rib 12. Further, when the force indicated by the arrow F is applied to the latch 22, a contact portion between the inclined surface 22b of the latch 22 on the right side and the rib 12 moves to an upper edge of the inclined surface 22b. As a result, as illustrated in FIG. 4C, the latch 22 moves in a downward direction. Accordingly, an engagement piece of the latch 22 on the left side (for example, a lower edge of the inclined surface 22a of the latch 22 on the left side) is positioned below the engagement surface of the engagement portion 11 of the monitor unit 10. That is, the peripheral bar unit 20 moves in a direction in which the monitor unit 10 and the peripheral bar unit 20 are separated from each other, that is, in the downward direction with respect to the monitor unit 10. However, in the state in FIG. 4C, the monitor unit 10 and the peripheral bar unit 20 are not completely separated from each other. FIG. 4C illustrates the state in which the force indicated by the arrow F is maximum applied to the latch 22, and the biased spring BN is most contracted. FIGS. 4D to 4E may be omitted, and the monitor unit 10 and the peripheral bar unit 20 may be completely separated from each other in the state in FIG. 4C.

Next, after FIG. 4C, the force indicated by the arrow F is released, resulting in the state in FIG. 4D. After this, since the latch 22 moves in a leftward direction due to a force of the spring BN, the engagement portion 11 and the lower edge of the inclined surface 22a of the latch 22 on the left side come into contact with each other. Then, since the force of the spring BN continues to be applied, the latch 22 continues to move, and a portion where the engagement portion 11 and the inclined surface 22a come into contact with each other gradually moves to an upper edge of the inclined surface 22a of the latch 22 on the left side. As a result, as illustrated in FIG. 4E, the monitor unit 10 and the peripheral bar unit 20 are detached.

As described above, in the electronic device 1 that includes the monitor unit 10 and the peripheral bar unit 20, which are attachably and detachably connected to each other, the peripheral bar unit 20 includes the latch 22 that includes the inclined surfaces 22a and 22b on each of the two left and right end portions thereof, and the monitor unit 10 includes the engagement portion 11 that engages with one of the left and right engagement ends 22c of the latch 22 (outer side in FIGS. 4A to 4E), and the rib 12 that is located in the other end side of the latch 22 (inner side in FIGS. 4A to 4E) and faces the engagement portion 11. The latch 22 is biased by the spring BN and is movable. As illustrated in FIGS. 3 and 4A, when the monitor unit 10 and the peripheral bar unit 20 are connected to each other, the latch 22 is positioned between the engagement portion 11 and the rib 12.

Further, when the monitor unit 10 and the peripheral bar unit 20 are detached, the latch 22 moves in an inner side direction of the peripheral bar unit 20 in the leftward-rightward direction due to a force toward the inner side thereof applied to the spring BN, so that the inclined surface 22b provided on an end portion of the latch 22 on the inner side comes into contact with an end portion (lower end) of the rib 12. Then, the peripheral bar unit 20 moves in a direction away from the monitor unit 10. Next, when the latch 22 moves in an outer side direction of the peripheral bar unit 20 in the leftward-rightward direction and the inclined surface 22a of the latch 22 on the outer side comes into contact with the engagement portion 11, the peripheral bar unit 20 moves in a direction away from the monitor unit 10. In the above description, the inner side direction and the outer side direction may be reversed. The spring BN is not necessarily required.

### 3. Regarding Connection Between Monitor Unit 10 and Peripheral Bar Unit 20

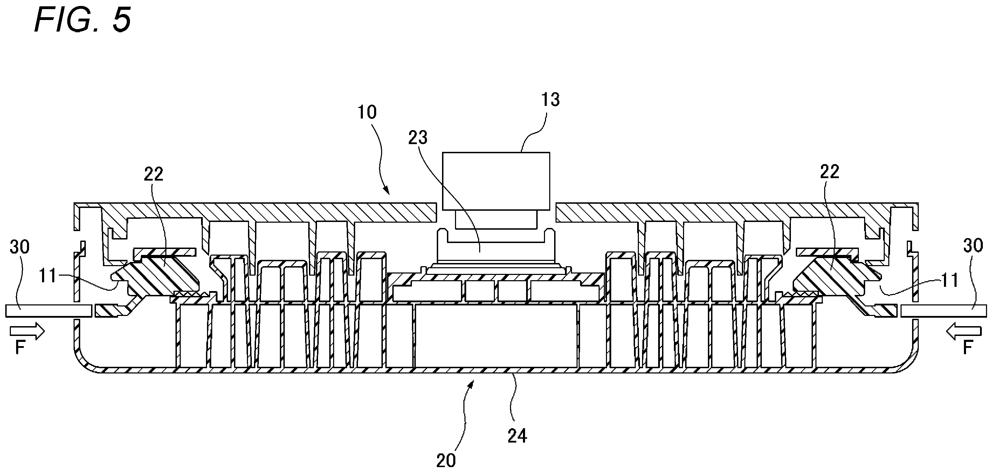

Next, a connection between the monitor unit 10 and the peripheral bar unit 20 will be described. FIG. 5 is a view illustrating the monitor unit 10 and the peripheral bar unit 20 when not connected.

As illustrated in FIG. 5, when the monitor unit 10 and the peripheral bar unit 20 are not connected, naturally, the connection portion 13 and the connection portion 23 are not connected, and the latch 22 and the engagement portion 11 are not engaged. By pushing the peripheral bar unit 20 toward the monitor unit 10 from the state in FIG. 5 and sequentially transitioning the state from FIGS. 4E to 4A, the monitor unit 10 and the peripheral bar unit 20 can be connected, as illustrated in FIG. 3. However, since the latch 22 is biased to the left side by the spring BN, the engagement portion 11 and the latch 22 do not separate as illustrated in FIG. 4C.

### 4. Regarding Countermeasures Against Unexpected Lock Release

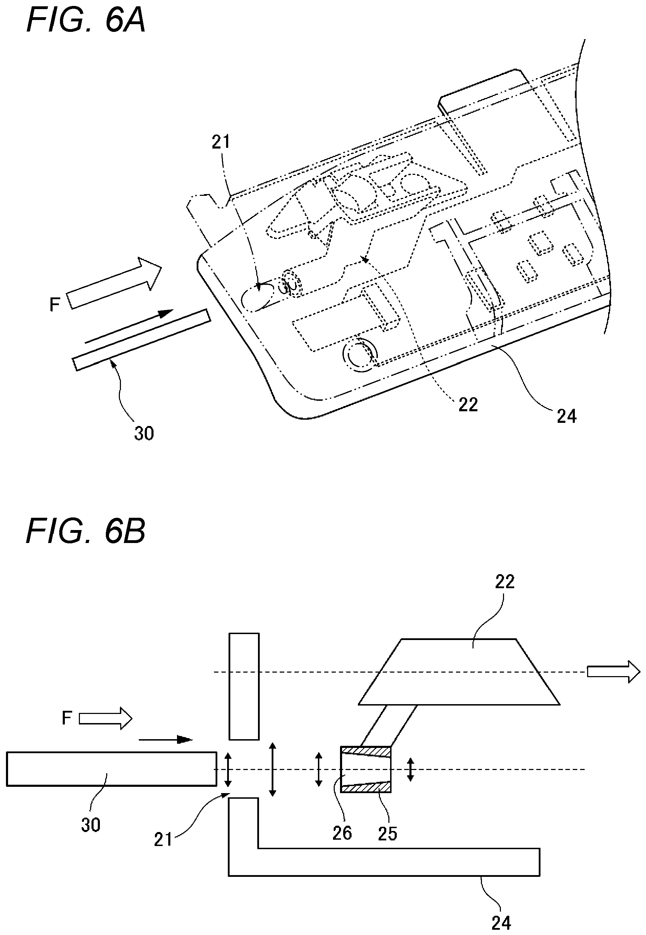

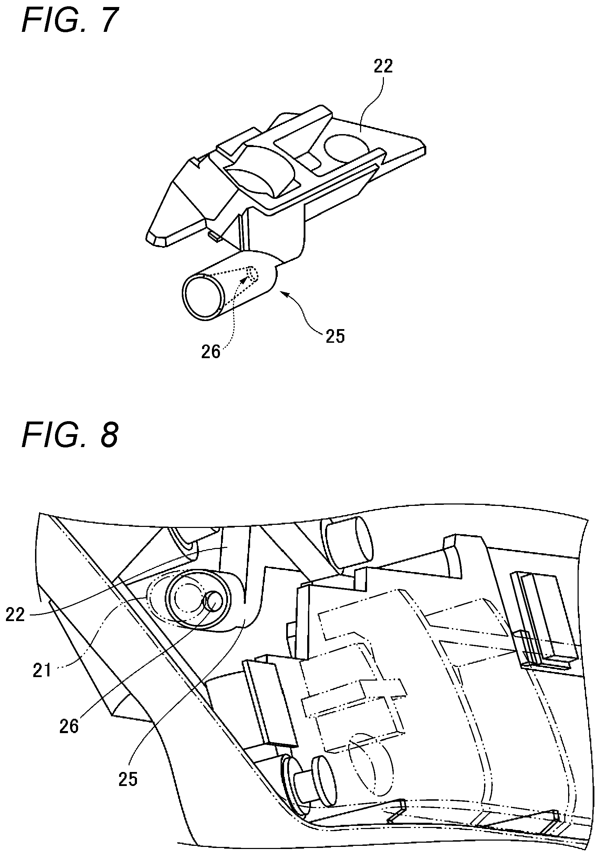

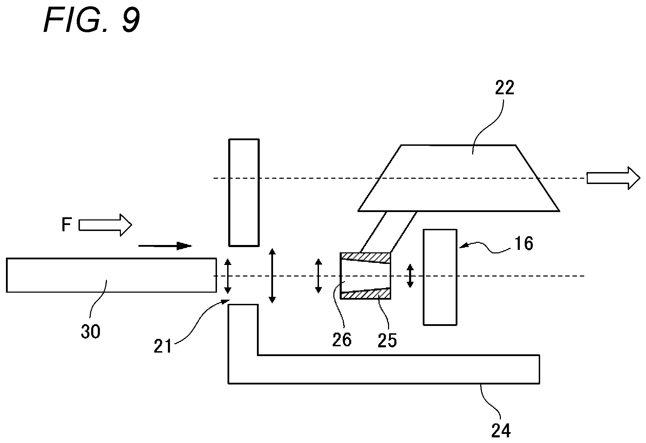

Next, countermeasures against unexpected lock release for the electronic device 1 will be described. FIGS. 6A and 6B are views illustrating a relation between a plurality of through holes and a tool, FIG. 6A is a perspective view, and FIG. 6B is an explanatory view. FIG. 7 is a view illustrating a pressing portion of a latch. FIG. 8 is a view illustrating a positional relation between the plurality of through holes. FIG. 9 is a view of the plurality of through holes and a stopper.

As illustrated in FIG. 6A, when the tool 30 presses the latch 22 through the access hole 21 provided in the casing 24, the latch 22 moves, and the monitor unit 10 and the peripheral bar unit 20 are detached from each other.

As illustrated in FIG. 6B, the pressing portion 25 of the latch 22 is pressed by the tool 30. The pressing portion 25 is provided with a pressing portion through hole 26. Therefore, even if an attempt is made to press the latch 22 with a rod-shaped member that is thinner than a width of the pressing portion through hole 26, the latch 22 cannot be pressed. A rod-shaped member having a width thicker than a width of the access hole 21 cannot be inserted into the access hole 21 in the first place, so naturally it is impossible to push the latch 22. That is, as illustrated in FIG. 6B, since a width X1 of the dedicated tool 30 is thinner than a width X2 of the access hole 21 and thicker than a width X4 of the pressing portion through hole 26, the pressing portion 25 of the latch 22 can be pressed. The width of the pressing portion through hole 26 refers to a minimum width such as a diameter when an inner peripheral shape of the pressing portion through hole 26 is circular, and a length of one side when the inner peripheral shape of the pressing portion through hole 26 is square. The width of the tool 30 refers to a maximum width of a cross section thereof. Depending on the tool 30, the access hole 21, and the shape of the pressing portion through hole 26, the width of the pressing portion through hole 26 may not be the minimum width. The width may also be referred to as a size or a cross-sectional area. It is important that the tool 30 can pass through the access hole 21 but cannot pass through the pressing portion through hole 26, so that the tool 30 can press the pressing portion 25. Here, the tool 30 is a 1/16-inch hex wrench and has a width of 1.59 mm. The width X2 of the access hole 21 is 1.80 mm, and the width X4 of the pressing portion through hole 26 is 1.55 mm. Generally, the width X4 of the pressing portion through hole 26 may be within a size of 80 to 90% of the width X2 of the access hole 21. The closer the width X4 of the pressing portion through hole 26 and the width X2 of the access hole 21 are (for example, 95%), the more the rod-shaped member that can press the pressing portion 25 can be restricted. On the other hand, the farther the width X4 of the pressing portion through hole 26 and the width X2 of the access hole 21 are (for example, 70%), the less strictly the size of the rod-shaped member needs to be controlled, and thus the rod-shaped member can be continuously used even if the rod-shaped member is slightly chipped. The entire shape of the tool 30 does not need to be rod-shaped. It is sufficient that a portion that can be inserted into the access hole 21 and presses the latch 22 is substantially rod-shaped. Further, the rod-shaped portion may be curved.

The access hole 21 and the pressing portion through hole 26 may be formed along the same axis. Further, this axis may be along a movement direction of the latch 22 as indicated by the dotted line in FIG. 6B. The term "along" includes being parallel and approximately parallel (within an error of about 15 degrees).

That is, the electronic device 1 is a connection device that includes a first unit (peripheral bar unit 20) and a second unit (monitor unit 10), which are attachably and detachably connected to each other. The connection device includes a casing 24 of the peripheral bar unit 20, a latch 22 that is provided inside the casing 24 of the peripheral bar unit 20 and includes a pressing portion 25, and an engagement portion 11 that is provided in the monitor unit 10 and engages with the latch 22. The latch 22 is movable when the pressing portion 25 is pressed, the casing 24 is provided with a first through hole (access hole 21) along a predetermined direction (for example, a direction of the dotted line in FIG. 6B), the pressing portion 25 is provided with a second through hole (pressing portion through hole 26) along the predetermined direction, and a width of the access hole 21 is greater than a width of the pressing portion through hole 26. Accordingly, in a connection structure that enables a plurality of units to be attached and detached, an effect of preventing unexpected disconnection can be improved.

Further, as illustrated in FIG. 6B, the monitor unit 10 and the peripheral bar unit 20 are detached from each other when the pressing portion 25 is pressed in the predetermined direction (for example, the direction of the dotted line in FIG. 6B). Since the direction in which the pressing portion 25 is pressed is along the directions of the access hole 21 and the pressing portion through hole 26, the monitor unit 10 and the peripheral bar unit 20 can be smoothly detached.

In addition, when the pressing portion 25 of the latch 22 is pressed by the tool 30 which is a rod-shaped tool passing through the access hole 21, the latch 22 can move in the predetermined direction (for example, the direction of the dotted line in FIG. 6B). That is, the width of the tool 30 is thinner than the width of the access hole 21.

Further, the width of the tool 30 is thinner than the width of the access hole 21 and thicker than the width of the pressing portion through hole 26. Accordingly, the tool 30 can press the pressing portion 25, but cannot press the pressing portion 25 with a rod-shaped member having a width thicker than the width of the access hole 21 or a rod-shaped member having a width thinner than the width of the pressing portion through hole 26.

As illustrated in FIGS. 6B and 7, the pressing portion through hole 26 of the pressing portion 25 has a funnel shape. That is, in FIG. 6B, the pressing portion through hole 26 has a maximum width X3 of a cross section on the outer side of the casing 24 along the axis in the predetermined direction (the direction of the dotted line) and has a minimum width X4 of a cross section on the inner side of the casing 24 along the axis in the predetermined direction. Further, the width of the tool 30 is thinner than X3 and thicker than X4. As a result, the tool 30 can firmly press the pressing portion 25 inside the pressing portion through hole 26. The pressing portion through hole 26 has a funnel shape, and is formed such that a width of a cross section thereof decreases from the outer side toward the inner side in the leftward-rightward direction of the casing 24 along the axis in the predetermined direction. In other words, the width of the pressing portion through hole 26 closer to the access hole 21 is greater, and the width thereof decreases as the pressing portion through hole 26 moves farther away from the access hole 21.

Therefore, although it has been described above that "the width of the access hole 21 is greater than the width of the pressing portion through hole 26", the width of the pressing portion through hole 26 here may be the width X4 of the cross section of the pressing portion through hole 26 on the inner side along the axis in the predetermined direction (for example, the direction of the dotted line in FIG. 6B). This is because the width of the tool 30 is thicker than the minimum cross section of the pressing portion through hole 26, so that the tool 30 can press the pressing portion 25.

The access hole 21 and the pressing portion through hole 26 may be provided to be positioned in parallel to the leftward-rightward direction of the casing 24. As a result, the rod-shaped tool 30 can intuitively press the pressing portion 25 in substantially the same direction as the leftward-rightward direction of the casing 24. As illustrated in FIG. 9, the width X3 of a cross section of the pressing portion through hole 26 on the outer side may be greater than the width X2 of the access hole 21. It is sufficient that the minimum width X4 of the pressing portion through hole 26 is smaller than the width X1 of the tool 30 and the width X2 of the access hole 21.

### 5. Regarding Stopper

Next, a stopper 16 will be described. FIG. 9 is a cross-sectional view illustrating a positional relation between the plurality of through holes and the stopper 16. The peripheral bar unit 20 is provided with the stopper 16 at a position on the inner side of the casing 24 with respect to the pressing portion 25. For example, when a rod-shaped member having a width thinner than the minimum width X4 of the pressing portion through hole 26 is inserted from the access hole 21, the rod-shaped member may pass through the pressing portion through hole 26 because the width thereof is thinner than the minimum width X4. In this case, a toothpick enters the inner side of the peripheral bar unit 20. To prevent this, the peripheral bar unit 20 is further provided with the stopper 16 on the inner side of the casing 24 with respect to the pressing portion through hole 26, and thus a thin rod-shaped member can be prevented from entering the peripheral bar unit 20. An area of a surface of the stopper 16 may be greater than an area of the pressing portion through hole 26. The surface of the stopper 16 is a surface that prevents intrusion of an entering object such as a toothpick.

The present disclosure is useful as presentations of a connection device and an electronic device capable of improving an effect of preventing unexpected disconnection in a connection structure that enables a plurality of units to be attached and detached.

## Claims

1. A device (1) being a connection device (1) or an electronic device (1), wherein the device (1) includes a first unit (20) and a second unit (10), which are attachably and detachably connected to each other, the device (1) comprising:
a casing (24) of the first unit (20);
a latch (22) that is provided inside the casing (24) of the first unit (20) and includes a pressing portion (25); and
an engagement portion (11) provided in the second unit (10) and configured to engage with the latch (22), wherein
the latch (22) is movable when the pressing portion (25) is pressed,
the casing (24) is provided with a first through hole (21) along a predetermined direction,
the pressing portion (25) is provided with a second through hole (26) along the predetermined direction, and
a width of the first through hole (21) is greater than a width of the second through hole (26).

2. The device (1) according to claim 1, wherein
the first unit (20) and the second unit (10) are detached from each other when the pressing portion (25) is pressed in the predetermined direction.

3. The device (1) according to claim 1 or 2, wherein
the latch (22) is movable in the predetermined direction when the pressing portion (25) of the latch (22) is pressed by a tool (30) passing through the first through hole (21).

4. The device according to claim 3, wherein
a width of the tool (30) is smaller than the width of the first through hole (21) and greater than the width of the second through hole (26).

5. The device according to any one of claims 1 to 4, wherein
the second through hole (26) has a maximum width on an outer side of the casing (24) along an axis in the predetermined direction, and a minimum width on an inner side of the casing (24) along the axis.

6. The device (1) according to any one of claims 1 to 5, wherein
the second through hole (26) has a funnel shape, and a width of the second through hole (26) decreases from an outer side toward an inner side of the casing (24) along an axis in the predetermined direction.

7. The device (1) according to any one of claims 1 to 6, wherein
the width of the second through hole (26) is a width of a cross section on an inner side of the casing (24) along an axis in the predetermined direction.

8. The device according to any one of claims 1 to 7, wherein
the first through hole (21) and the second through hole (26) are positioned on a straight line.

9. The device according to any one of claims 1 to 8, wherein
the first unit (20) further includes a stopper (16) on an inner side of the casing (24) with respect to the second through hole (26).

## Patentansprüche

1. Vorrichtung (1), die eine Verbindungsvorrichtung (1) oder eine elektronische Vorrichtung (1) ist, wobei die Vorrichtung (1) eine erste Einheit (20) und eine zweite Einheit (10) umfasst, die miteinander verbindbar und lösbar verbunden sind, wobei die Vorrichtung (1) auf:
ein Gehäuse (24) der ersten Einheit (20);
eine Sperre (22), die innerhalb des Gehäuses (24) der ersten Einheit (20) vorgesehen ist und einen Druckabschnitt (25) umfasst; und
einen Eingriffsabschnitt (11), der in der zweiten Einheit (10) vorgesehen und ausgestaltet ist, mit der Sperre (22) in Eingriff zu kommen, wobei
die Sperre (22) bewegbar ist, wenn der Druckabschnitt (25) gedrückt wird,
das Gehäuse (24) mit einem ersten Durchgangsloch (21) entlang einer vorbestimmten Richtung versehen ist,
der Druckabschnitt (25) mit einem zweiten Durchgangsloch (26) entlang der vorbestimmten Richtung versehen ist, und
eine Weite des ersten Durchgangslochs (21) größer ist als eine Weite des zweiten Durchgangslochs (26).

2. Vorrichtung (1) nach Anspruch 1, wobei
die erste Einheit (20) und die zweite Einheit (10) voneinander getrennt werden, wenn der Druckabschnitt (25) in der vorbestimmten Richtung gedrückt wird.

3. Vorrichtung (1) nach Anspruch 1 oder 2, wobei
die Sperre (22) in der vorbestimmten Richtung bewegbar ist, wenn der Druckabschnitt (25) der Sperre (22) durch ein Werkzeug (30) gedrückt wird, das das erste Durchgangsloch (21) passiert.

4. Vorrichtung nach Anspruch 3, wobei
eine Weite des Werkzeugs (30) kleiner ist als die Weite des ersten Durchgangslochs (21) und größer als die Weite des zweiten Durchgangslochs (26).

5. Vorrichtung nach einem der Ansprüche 1 bis 4, wobei
das zweite Durchgangsloch (26) eine maximale Weite an einer Außenseite des Gehäuses (24) entlang einer Achse in der vorbestimmten Richtung und eine minimale Weite an einer Innenseite des Gehäuses (24) entlang der Achse aufweist.

6. Vorrichtung (1) nach einem der Ansprüche 1 bis 5, wobei
das zweite Durchgangsloch (26) eine Trichterform aufweist und eine Weite des zweiten Durchgangslochs (26) entlang einer Achse in der vorbestimmten Richtung von einer Außenseite zu einer Innenseite des Gehäuses (24) hin abnimmt.

7. Vorrichtung (1) nach einem der Ansprüche 1 bis 6, wobei
die Weite des zweiten Durchgangslochs (26) eine Weite eines Querschnitts auf einer Innenseite des Gehäuses (24) entlang einer Achse in der vorbestimmten Richtung ist.

8. Vorrichtung nach einem der Ansprüche 1 bis 7, wobei
das erste Durchgangsloch (21) und das zweite Durchgangsloch (26) auf einer geraden Linie angeordnet sind.

9. Vorrichtung nach einem der Ansprüche 1 bis 8, wobei
die erste Einheit (20) ferner einen Anschlag (16) auf einer Innenseite des Gehäuses (24) in Bezug auf das zweite Durchgangsloch (26) aufweist.

## Revendications

1. Dispositif (1) qui est un dispositif de connexion (1) ou un dispositif électronique (1), dans lequel le dispositif (1) comprend une première unité (20) et une deuxième unité (10) qui sont reliées l'une à l'autre de manière attachable et détachable, le dispositif (1) comprenant:
un boîtier (24) de la première unité (20);
un loquet (22) qui est prévu à l'intérieur du boîtier (24) de la première unité (20) et comprend une portion de pression (25) ; et
une portion d'engagement (11) qui est prévue dans la deuxième unité (10) et est configurée pour s'engager avec le loquet (22), dans lequel
le loquet (22) est mobile lorsque la portion de pression (25) est pressée,
le boîtier (24) est pourvu d'un premier trou traversant (21) s'étendant selon une direction prédéterminée,
la portion de pression (25) est pourvue d'un deuxième trou traversant (26) s'étendant selon la direction prédéterminée, et
une largeur du premier trou traversant (21) est supérieure à une largeur du deuxième trou traversant (26).

2. Dispositif selon la revendication 1, dans lequel
la première unité (20) et la deuxième unité (10) sont séparées l'une de l'autre lorsque la portion de pression (25) est pressée dans la direction prédéterminée.

3. Dispositif selon la revendication 1 ou 2, dans lequel
le loquet (22) est mobile dans la direction prédéterminée lorsque la portion de pression (25) du loquet (22) est pressée par un outil (30) qui passe à travers le premier trou traversant (21).

4. Dispositif selon la revendication 3, dans lequel
une largeur de l'outil (30) est inférieure à la largeur du premier trou traversant (21) et est supérieure à la largeur du deuxième trou traversant (26).

5. Dispositif selon l'une quelconque des revendications 1 ou 4, dans lequel
le deuxième trou traversant (26) présente une largeur maximale sur un côté extérieur du boîtier (24) le long d'un axe dans la direction prédéterminée, et une largeur minimale sur un côté intérieur du boîtier (24) le long de l'axe.

6. Dispositif selon l'une quelconque des revendications 1 à 5, dans lequel
le deuxième trou traversant (26) présente une forme d'entonnoir, et une largeur du deuxième trou traversant (26) diminue depuis un côté extérieur vers un côté intérieur du boîtier (24) le long d'un axe dans la direction prédéterminée.

7. Dispositif selon l'une quelconque des revendications 1 à 6, dans lequel
la largeur du deuxième trou traversant (26) est une largeur d'une section transversale sur un côté intérieur du boîtier (24) le long d'un axe dans la direction prédéterminée.

8. Dispositif selon l'une quelconque des revendications 1 à 7, dans lequel
le premier trou traversant (21) et le deuxième trou traversant (26) sont positionnés sur une ligne droite.

9. Dispositif selon l'une quelconque des revendications 1 à 8, dans lequel
la première unité (20) comprend en outre une butée (16) située sur un côté intérieur du boîtier (24) par rapport au deuxième trou traversant (26).
